# EUROPÄISCHE PATENTSCHRIFT

(11) **EP 2 146 659 B1**
(45) Veröffentlichungstag und Bekanntmachung des Hinweises auf die Patenterteilung: **24.08.2016**
(21) Anmeldenummer: 08758592.3
(22) Anmeldetag: 16.05.2008
(51) Int. Cl.: A61C 1/00, A61C 19/00

(54) **GERÄT ZUM WEITERVERARBEITEN EINES FLÜSSIGEN MITTELS**
DEVICE FOR PROCESSING A FLUID MATERIAL
APPAREIL POUR RÉALISER UN TRAITEMENT D'UN AGENT LIQUIDE

(30) Priorität: 16.05.2007 DE 102007022946
(43) Veröffentlichungstag der Anmeldung: 27.01.2010
(73) Patentinhaber: Kaltenbach & Voigt GmbH, 88400 Biberach (DE)
(72) Erfinder: WIEK, Hans-Dieter, 88454 Hochdorf 2 (DE); MOHN, Uwe, 89601 Schelklingen (DE)
(74) Vertreter: Thun, Clemens
(86) Internationale Anmeldenummer: PCT/EP2008/003967
(87) Internationale Veröffentlichungsnummer: WO 2008/138645

(56) Entgegenhaltungen:
- EP-A- 1 665 999
- DE-A1- 19 913 945

## Beschreibung

Die vorliegende Erfindung betrifft ein Gerät zum Weiterverarbeiten eines flüssigen Mittels vorgesehen ist, wobei das Mittel in einem unter Druck stehenden Behälter bereitgehalten ist. Insbesondere betrifft die vorliegende Erfindung ein Gerät zur Pflege ärztlicher oder zahnärztlicher Handstücke.

Ein derartiges Pflegegerät ist beispielsweise aus der DE 199 13 945 A1 der Anmelderin bekannt. Es dient insbesondere dazu, die Antriebskanäle sowie die darin drehbar gelagerten Antriebselemente zahnärztlicher Handstücke zu reinigen und zu pflegen. Hierbei werden die Handstücke mit entsprechenden Anschlüssen gekoppelt, über die Reinigungs- und Pflegemedien durch die verschiedenen Kanäle der röhrenförmigen Handstücke geleitet werden. Insbesondere das hierbei abschließend zugeführte Pflegemittel dient dabei dazu, die einzelnen Komponenten vor einem übermäßigen Verschleiß während der Benutzung zu schützen.

Das im Rahmen der Pflege derartiger ärztlicher oder zahnärztlicher Handstücke verwendete Pflegemittel wird in der Regel von dem Hersteller in Form von Spraydosen zur Verfügung gestellt. Diese Dosen beinhalten unter Druck das Pflegemittel und stellen es bei Bedarf zur Verfügung, wobei das Gerät eine entsprechende Kupplungsvorrichtung mit einem Adapter zur Verbindung mit der Spraydose bzw. allgemein dem unter Druck stehenden Vorratsbehälter zur Verfügung stellt.

Die im Rahmen derartiger Pflegemaßnahmen verwendeten Pflegemittel sind üblicherweise leicht entflammbar. Da die Behälter ferner unter Druck stehen, muss Sorge dafür getragen werden, dass eine zuverlässige Verbindung zwischen dem Vorratsbehälter für das Pflegemittel einerseits und dem Pflegegerät andererseits besteht. Trotz verschiedenartiger Lösungen hat sich bislang nach wie vor eine Schraubverbindung als optimale Verbindung herausgestellt. Diese bringt allerdings den Nachteil mit sich, dass das Entnehmen und neue Einfügen eines Vorratsbehälters umständlich ist oder zumindest dazu führt, dass die Zugänglichkeit zu der Kupplungsvorrichtung beispielsweise durch eine Vergrößerung des Gehäuses erleichtert werden muss.

Der vorliegenden Erfindung liegt dementsprechend die Aufgabe zugrunde, eine Möglichkeit zu schaffen, eine zuverlässige Kupplung zwischen einem Vorratsbehälter für ein Pflegemittel und einem entsprechenden Gerät herzustellen, wobei allerdings die Handhabung im Vergleich zu bislang bekannten Lösungen erleichtert werden soll.

Die Aufgabe wird durch ein Gerät zum Weiterverarbeiten eines flüssigen Mittels, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht wiederum zunächst auf dem Gedanken, die Kupplungsvorrichtung derart auszugestalten, dass über einen entsprechenden Adapter eine Schraubverbindung mit dem unter Druck stehenden Behälter ausgebildet werden kann. Erfindungsgemäß ist nunmehr allerdings die Kupplungsvorrichtung derart ausgestaltet, dass der Adapter schwenkbar gelagert ist.

Dementsprechend wird ein Gerät zum Weiterverarbeiten eines flüssigen Mittels, insbesondere ein Pflegegerät für ärztliche oder zahnärztliche Handstücke vorgeschlagen, wobei das Mittel in einem unter Druck stehenden Behälter bereitgehalten ist, das Gerät eine Kupplungsvorrichtung mit einem schwenkbar gelagertem Adapter zur Ausbildung einer Schraubverbindung mit dem unter Druck stehenden Behälter aufweist und wobei die Kupplungsvorrichtung eine klammerartige Halterung für den Adapter aufweist.

Durch die schwenkbare Lagerung des Adapters zur Ausbildung der Schraubverbindung mit dem unter Druck stehenden Behälter wird der Wechsel eines Vorratsbehälters für ein entsprechendes Pflegemittel erleichtert, da für den Ein- und Ausschraubvorgang der Adapter und damit der daran zu befestigende Behälter derart positioniert werden können, dass der Behälter einfacher zugänglich ist. Insbesondere kann vorgesehen sein, dass der Adapter der Kupplungsvorrichtung zwischen einer Betriebsstellung, in der der Behälter vollständig innerhalb eines Gehäuses des Geräts angeordnet ist, sowie einer Wartungsstellung schwenkbar ist, wobei in der Wartungsstellung zumindest ein Teil des Vorratsbehälters aus dem Gerätegehäuse heraus ragt. Hierbei kann insbesondere vorgesehen sein, dass an der Kupplungsvorrichtung Rastmittel vorgesehen sind, durch welche die Betriebsstellung einerseits und die Wartungsstellung andererseits definiert werden.

Die erfindungsgemäße Lösung zeichnet sich also dadurch aus, dass einerseits eine äußerst zuverlässige Verbindung zwischen dem Vorratsbehälter und dem Gerät hergestellt werden kann, andererseits das Einführen und Entnehmen der Vorratsbehälters erleichtert ist. Insgesamt wird hierdurch die Handhabung des Geräts verbessert.

Nachfolgend soll die Erfindung anhand der beiliegenden Zeichnungen näher erläutert werden. Es zeigen:
- Figur 1: eine perspektivische Ansicht eines erfindungsgemäßen Geräts zum Pflegen ärztlicher oder zahnärztlicher Handstücke;
- Figur 2: eine seitliche Ansicht des Geräts von Figur 1;
- Figuren 3 bis 6: verschiedene Ansichten der Kupplungsvorrichtung mit dem schwenkbar gelagerten Adapter;
- Figur 7: den in die Wartungsstellung verschwenkten Adapter; und
- Figuren 8 und 9: Anordnungen einer mit dem Adapter verbundenen Pflegemitteldose in den zwei verschiedenen Schwenkstellungen.

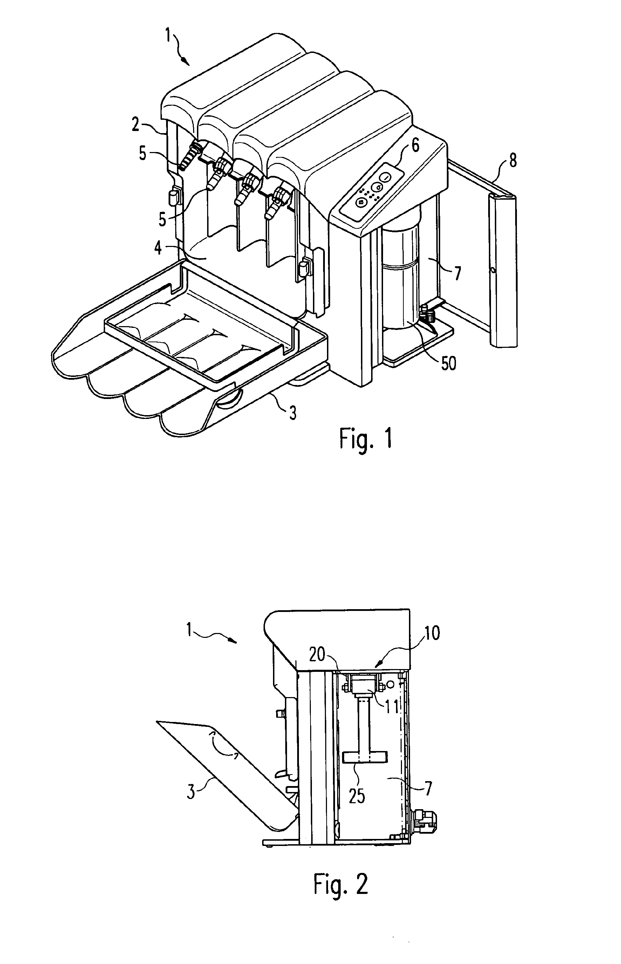

Figur 1 zeigt ein allgemein mit dem Bezugszeichen 1 versehenes Pflegegerät, dessen Einzelteile bzw. Baugruppen in ein Gehäuse 2 integriert sind. Dieses ist im Wesentlichen quaderförmig ausgebildet, wobei an dessen Vorderseite eine erste Schwenktür 3 ausgebildet ist, über die Zugang zu einem Pflegeraum 4 erhalten werden kann. Figur 1 zeigt hierbei das Pflegegerät 1 bei geöffneter Tür 3.

Der Pflegeraum 4 dient zur Aufnahme zu reinigender und zu pflegender ärztlicher oder zahnärztlicher Handstücke, wobei hierzu innerhalb des Pflegeraums 4 mehrere Steckverbindungsteile 5 ausgebildet sind, auf welche die Handstücke aufgesteckt werden können. Die Steckverbindungsteile 5 sind mit entsprechenden Zuführungsleitungen ausgebildet, über die in die Handstücke Reinigungs- und/oder Pflegemittel eingeführt werden können, um diese zu pflegen. Hinsichtlich der speziellen Vorgehensweise zur Reinigung und Pflege der Handstücke wird hierbei auf die bereits zuvor erwähnte DE 199 13 945 A1 verwiesen. Eine Bedienung des Geräts 1 erfolgt über ein an der Oberseite des Gehäuses 2 ausgebildetes Bedienfeld 6.

Insbesondere das Pflegemittel, welches zum Abschluss des Reinigungs- und Pflegevorgangs durch die Handstücke geleitet wird, wird durch einen auswechselbaren Vorratsbehälter in Form einer unter Druck stehenden Dose 50 zur Verfügung gestellt. Zur Aufnahme der Dose 50 ist entsprechend der Darstellung in Figur 1 im Gehäuse 2 ein weiterer Aufnahmeraum 7 ausgebildet, der über eine weitere, seitliche Tür 8 zugänglich ist. Mittels einer speziellen Kupplungsvorrichtung, welche nachfolgend noch näher erläutert wird, wird die Dose 50 mit dem Gerät 1 verbunden, sodass während des Betriebs des Geräts 1 das Pflegemittel entnommen werden kann.

Das zum Reinigen und Pflegen ärztlicher bzw. zahnärztlicher Handstücke üblicherweise eingesetzte Pflegemittel ist entzündlich, weshalb bei der Ankopplung der Druckdose 50 an das Gerät 1 eine sichere Verbindung hergestellt werden sollte. Die hierzu vorgesehene Kupplungsvorrichtung, welche beispielsweise in der seitlichen Darstellung in Figur 2 gezeigt und mit dem Bezugszeichen 10 versehen ist, weist dementsprechend einen Adapter 11 auf, der zur Ausbildung einer Schraubverbindung mit der Druckdose 50 ausgebildet ist. Hierbei ergibt sich die Problematik, dass die Dose 50 in geeigneter Weise an den Adapter 11 angesetzt werden muss, was bei bislang bekannten Ausführungsformen zu einer verhältnismäßig komplizierten Handhabung führte. Insbesondere ist ein Umgreifen und Ein- bzw. Herausschrauben der Dose 50 bei der in Figur 1 dargestellten Stellung nur schwer durchzuführen, da die Platzverhältnisse in dem Aufnahmeraum 7 sehr beengt sind. Um dementsprechend die Handhabung zu erleichtern, ist die Kupplungsvorrichtung 10 in spezieller Weise ausgestaltet, was nachfolgend erläutert werden soll.

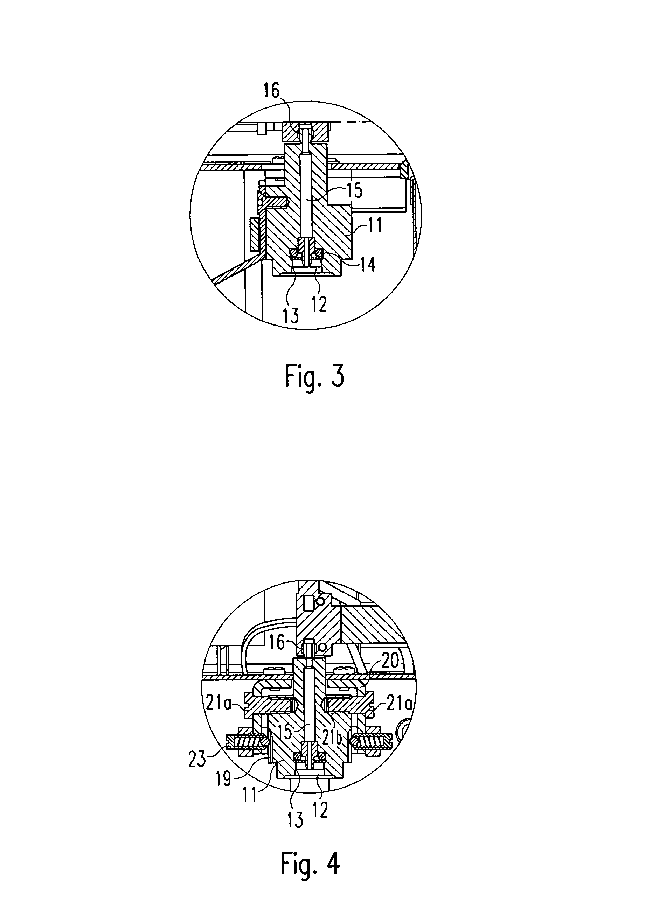

Die Besonderheit der in den Figuren 3 bis 7 näher dargestellten Kupplungsvorrichtung 10 besteht darin, dass diese einen Adapter 11 aufweist, der schwenkbar gelagert ist. Der Adapter 11 weist entsprechend den Darstellungen an seiner Unterseite eine Einführungsöffnung 12 für den Ventilanschluss der Druckdose 50 auf, welche mit einem Innen-Gewinde 13 versehen ist, um eine Schraubverbindung mit der Dose 50 auszubilden. Am Boden der Einführungsöffnung 12 ist ein O-Ring 14 angeordnet, über den eine zusätzliche Dichtung erzielt wird, um letztendlich zuverlässig eine druckdichte Verbindung mit der Dose 50 herzustellen. Durch den Adapter 11 erstreckt sich eine Durchführungsleitung bzw. -bohrung 15, welche mit ihrem oberen Ende an einem Anschlussstutzen 16 für eine Medienleitung endet, über die dann letztendlich dem Pflegegerät 1 das entsprechende Pflegemittel zugeführt werden kann. Diese Durchführungsleitung 15 kann über eine Sperrventil 17, dass über einen an der Vorderseite des Adapters 11 ausgebildeten Hahn bzw. Hebel 18 betätigt werden kann, wahlweise geöffnet oder geschlossen werden, wodurch sich die Betriebssicherheit weiter erhöht.

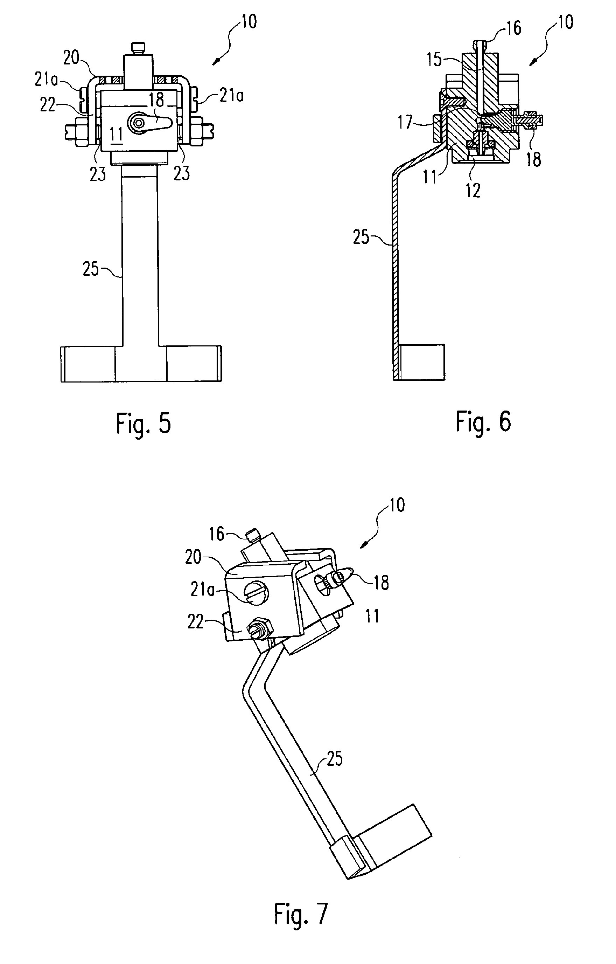

Entsprechend der Schnittdarstellung in Figur 4 ist der Adapter 11 an einer klammerförmigen Halterung 20 gelagert, wobei zwei seitliche Stifte 21a in entsprechende Öffnungen bzw. Ausnehmungen 21 b des Adapters 11 eingreifen. Durch diese Stifte 21a, welche an seitlichen Armen 22 der Halterung 20 befestigt sind, wird eine Schwenkachse definiert, welche es ermöglicht, den Adapter 11 zwischen zwei verschiedenen Stellungen zu verschwenken. Durch an der Außenseite des Adapters 11 ausgebildete Nuten 19 sowie mit diesen Nuten 19 zusammenwirkende Stifte 23, welche an den Unterseiten des klammerartigen Halteelements 20 befestigt sind, sind Verrastvorrichtungen gebildet, durch welche zwei verschiedenen Schwenkstellungen des Adapters 11 definiert werden. In einer ersten Stellung ist der Adapter 11 vertikal orientiert. Diese Stellung entspricht einer Betriebsstellung, bei der die Spraydose 50 wie in Figur 1 dargestellt vollständig innerhalb des Aufnahmeraums 7 angeordnet ist. Demgegenüber zeichnet sich die in Figur 7 dargestellte Wartungsstellung dadurch aus, dass der Adapter 11 um einen Winkel von etwa 30° bis 45° gegenüber dem Halteelement 20 verschwenkt ist. Eine von dem Adapter zur Unterseite hin ragende Führung 25 ist in diesem Fall aus dem Gehäuse herausgeschwenkt.

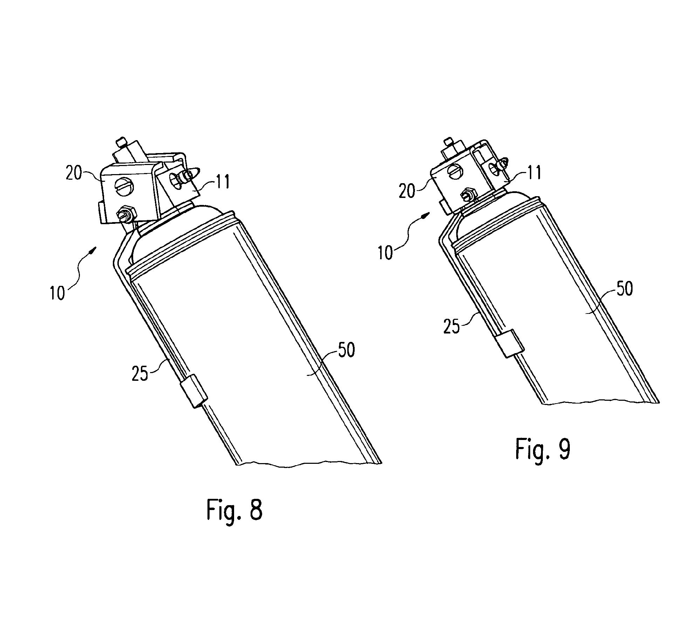

Entsprechend den Darstellungen in den Figuren 8 und 9, wobei Figur 8 die Wartungsstellung und Figur 9 die Betriebsstellung zeigt, ist bei der Wartungsstellung auch die Dose 50 - zumindest deren unteres Ende - aus dem Gehäuse 2 des Pflegegeräts 1 herausgeführt. Die Dose 50 kann also schräg von der Unterseite her auf den in der Wartungsstellung verrasteten Adapter 11 aufgesetzt und mit diesem verschraubt werden. Dieser Vorgang ist einfach durchzuführen, da bei seitlich verschwenktem Adapter 11 und damit herausragender Dose 50 diese in einfacher Weise umfasst werden kann. Nachdem die Schraubverbindung zwischen Dose 50 und Adapter 11 hergestellt wurde, wird dieser in die Betriebsstellung verschwenkt und damit die Dose entsprechend der Darstellung in Figur 1 vollständig ist den Aufnahmeraum 7 eingeführt.

Der Vorteil dieser besonderen Ausgestaltung besteht darin, dass das Auswechseln der Dose sehr einfach durchzuführen ist, gleichzeitig allerdings eine sichere und insbesondere druckdichte Verbindung zwischen Adapter und Dose im Rahmen einer Schraubverbindung hergestellt werden kann. Damit ist das Gerät bei hoher Betriebssicherheit einfach zu handhaben.

## Patentansprüche

1. Gerät (1) zum Weiterverarbeiten eine flüssigen Mittels, insbesondere Pflegegerät für ärztliche oder zahnärztliche Handstücke, wobei das Mittel in einem unter Druck stehenden Behälter (50) bereitgehalten ist, wobei das Gerät (1) eine Kupplungsvorrichtung (10) mit einem schwenkbar gelagerten Adapter (11) zur Ausbildung einer Schraubverbindung mit dem unter Druck stehenden Behälter (50) aufweist und wobei die Kupplungsvorrichtung (10) eine klammerartige Halterung (20) für den Adapter aufweist.

2. Gerät nach Anspruch 1,
**dadurch gekennzeichnet,**
**dass** der Adapter (11) der Kupplungsvorrichtung (10) zwischen einer Betriebsstellung sowie einer Wartungsstellung schwenkbar ist.

3. Gerät nach Anspruch 2,
**dadurch gekennzeichnet,**
**dass** die Kupplungsvorrichtung (10) Rastmittel (19, 23) aufweist, durch welche die Betriebsstellung einerseits und die Wartungsstellung andererseits definiert ist.

4. Gerät nach Anspruch 2 oder 3.
**dadurch gekennzeichnet,**
**dass** ein in der Wartungsstellung mit dem Adapter (11) gekoppelter Behälter (50) aus einem Gehäuse (2) des Geräts (1) herausragt.

5. Gerät nach einem der Ansprüche 2 bis 4,
Gerät nach Anspruch 2 oder 3.
**dadurch gekennzeichnet,**
**dass** ein in der Betriebsstellung mit dem Adapter (11) gekoppelter Behälter (50) vertikal in dem Gerät (1) angeordnet ist.

6. Gerät nach einem der vorherigen Ansprüche,
**gekennzeichnet durch**
einen Aufnahmeraum (7) für den Behälter (50), der über eine Türe (8) zugänglich ist.

7. Gerät nach einem der vorherigen Ansprüche,
**gekennzeichnet durch**
an dem Adapter (11) befindliche Absperrmittel (17, 18) zum wahlweisen Öffnen bzw. Sperren einer von dem Behälter (50) zu dem Gerät (1) führenden Zuführungsleitung (15).

## Claims

1. A device (1) for further processing a fluid agent, in particular a maintenance device for medical or dental handpieces, wherein the agent is stored in a pressurized container (50), wherein the device (1) has a coupling apparatus (10) with a pivotably mounted adapter (11) for forming a screw connection to the pressurized container (50), and wherein the coupling apparatus (10) has a clasp-like holder (20) for the adapter.

2. A device according to claim 1,
**characterized**
**in that** the adapter (11) of the coupling apparatus (10) is pivotable between an operating position and a maintenance position.

3. A device according to claim 2,
**characterized**
**in that** the coupling apparatus (10) has latching means (19, 23) which firstly define the operating position and secondly define the maintenance position.

4. A device according to claim 2 or 3,
**characterized**
**in that** a container (50) coupled to the adapter (11) in the maintenance position protrudes out of a housing (2) of the device (1).

5. A device according to one of claims 2 to 4,
device according to claim 2 or 3.
**characterized**
**in that** a container (50) coupled to the adapter (11) in the operating position is arranged vertically in the device (1).

6. A device according to one of the preceding claims, **characterized by**
an accommodating space (7) for the container (50), accessible via a door (8).

7. A device according to one of the preceding claims, **characterized by**
shut-off means (17, 18) located on the adapter (11) for optionally opening or closing off a supply line (15) which leads from the container (50) to the device (1).

## Revendications

1. Appareil (1) pour le traitement ultérieur d'un agent liquide, en particulier un appareil d'entretien pour des pièces à main médicales ou dentaires, dans lequel le moyen est mis à disposition dans un récipient (50) se trouvant sous pression, dans lequel l'appareil (1) présente un dispositif de couplage (10) avec un adaptateur (11) logé de manière à pouvoir pivoter pour la réalisation d'une liaison par vissage avec le récipient (50) se trouvant sous pression et dans lequel le dispositif de couplage (10) présente un support (20) de type agrafe pour l'adaptateur.

2. Appareil selon la revendication 1,
**caractérisé en ce**
**que** l'adaptateur (11) du dispositif de couplage (10) peut pivoter entre une position de fonctionnement ainsi qu'une position d'entretien.

3. Appareil selon la revendication 2,
**caractérisé en ce**
**que** le dispositif de couplage (10) présente des moyens d'encliquetage (19, 23), par lesquels la position de fonctionnement d'une part et la position d'entretien d'autre part sont définies.

4. Appareil selon la revendication 2 ou 3,
**caractérisé en ce**
**qu'**un récipient (50) couplé dans la position d'entretien à l'adaptateur (11) dépasse d'un boîtier (2) de l'appareil (1).

5. Appareil selon l'une quelconque des revendications 2 à 4,
appareil selon la revendication 2 ou 3.
**caractérisé en ce**
**qu'**un récipient (50) couplé dans la position de fonctionnement à l'adaptateur (11) est agencé verticalement dans l'appareil (1).

6. Appareil selon l'une quelconque des revendications précédentes, **caractérisé par**
un espace de réception (7) pour le récipient (50) qui est accessible par une porte (8).

7. Appareil selon l'une quelconque des revendications précédentes, **caractérisé par**
des moyens de blocage (17, 18) se trouvant sur l'adaptateur (11) pour l'ouverture ou le blocage au choix d'une conduite d'amenée (15) menant du récipient (50) à l'appareil (1).
